# EUROPÄISCHE PATENTSCHRIFT

(11) **EP 3 974 234 B1**
(45) Veröffentlichungstag und Bekanntmachung des Hinweises auf die Patenterteilung: **01.05.2024**
(21) Anmeldenummer: 21196233.7
(22) Anmeldetag: 13.09.2021
(51) Int. Cl.: B60L 5/22, B60L 5/28, B60L 5/10, B60L 5/14, B60L 5/16, B60L 5/24

(54) **STRASSENFAHRZEUG MIT EINEM STROMABNEHMER**
ROAD VEHICLE WITH CURRENT COLLECTOR
VÉHICULE ROUTIER DOTÉ D'UN COLLECTEUR DE COURANT

(30) Priorität: 29.09.2020 DE 102020212265
(43) Veröffentlichungstag der Anmeldung: 30.03.2022
(73) Patentinhaber: Siemens Mobility GmbH, 81739 München (DE); Volkswagen Aktiengesellschaft, 38440 Wolfsburg (DE)
(72) Erfinder: Blase, Bastian, 13187 Berlin (DE); Bühs, Florian, 10777 Berlin (DE); Sänger, Göran, 12587 Berlin (DE)
(74) Vertreter: FDST Patentanwälte

(56) Entgegenhaltungen:
- WO-A1-2016/127775
- CN-A- 111 267 624
- DE-A1-102008 048 827
- DE-A1-102012 213 460
- DE-A1-102015 121 879
- DE-A1-102017 215 135
- DE-A1-102018 215 941
- DE-U1-202012 012 543
- US-A1- 2002 134 631

## Beschreibung

Die Erfindung betrifft ein Straßenfahrzeug nach dem Oberbegriff des Patentanspruches 1.

Ein derartiges elektromotorisch angetriebenes Kraftfahrzeug, beispielsweise ein Lastkraftwagen, ist aus der internationalen Veröffentlichung WO 2019/042843 A1 bekannt. Zur elektrischen Versorgung des Kraftfahrzeuges ist oberhalb einer Fahrbahn eine sich in eine Fahrtrichtung erstreckende Oberleitung angeordnet. Die Oberleitung weist Fahrdrähte auf, die mit einer elektrischen Spannung beaufschlagt, sind. Um diese Spannung abgreifen zu können, weist das Kraftfahrzeug einen Stromabnehmer mit einem Stromabnehmerarm auf, der in und entgegen einer Vertikalrichtung verfahrbar ist. Am Stromabnehmerarm ist ein Halteelement in Form einer Wippe angeordnet, welches zwei Kontaktbereiche mit jeweils mindestens einer Schleifleiste aufweist. Die Schleifleisten dienen einer direkten Kontaktierung mit dem Fahrdraht, sodass die Schleifleisten beispielsweise im Fahrbetrieb an dem Fahrdraht entlangschleifen und somit die elektrische Versorgung des Kraftfahrzeuges sicherstellen. Jeweils beidendseitig an die Schleifleisten sind Endkontaktelemente angeordnet. Die Endkontaktelemente weisen eine entgegen der Vertikalrichtung - also nach unten - gebogene Form auf, wodurch sie auch als Hörner bezeichnet werden. Die Endkontaktelemente verhindern, dass ein Fahrdraht unter den Kontaktbereich rutscht. Weiterhin begrenzen die Endkontaktelemente einen maximal zulässigen lateralen Versatz, worunter eine zum Fahrdraht quer gerichtete Auslenkung des Stromabnehmers und insbesondere seiner Schleifleisten verstanden wird, sodass eine funktionsfähige Kontaktierung zum Fahrdraht sichergestellt ist. Zugleich ist hierdurch ein maximal zulässiger lateraler Versatz des Kraftfahrzeuges vorgegeben. Um ein Überschreiten des maximal zulässigen lateralen Versatzes zu verhindern, weist der Stromabnehmer eine Messvorrichtung auf. Bewegt sich das Kraftfahrzeug und/oder der Stromabnehmer quer zu den Fahrdrähten so weit, dass die entsprechenden Endkontaktelemente an dem Fahrdraht schleifen, so schließt der Fahrdraht die beiden Endkontaktelemente kurz, was in der Messvorrichtung detektiert wird. Eine an die Messvorrichtung angeschlossene Auswerteeinheit erstellt bei Detektion eines solchen Ereignisses ein Warnsignal an einen Führer des Kraftfahrzeuges und/oder ein Stellsignal an eine Kontrolleinheit zum Absenken des Stromabnehmers.

Schienengebundene und via Oberleitung versorgte Fahrzeug sind bspw. aus CN 111 267 624 A und DE 10 2015 121 879 A1 bekannt.

Da die bekannten Kraftfahrzeuge im Straßenverkehr nicht spurgebunden sind, können sie jederzeit und auch abrupt - beispielsweise durch Gefahrensituationen ausgelöst - stark zur Seite ausweichen und dabei ihre Fahrspur verlassen. Ein in diesem Moment die Oberleitung kontaktierender Stromabnehmer muss dann sehr schnell abgesenkt werden, um nicht mit seitlich angeordneten Infrastruktureinrichtungen zu kollidieren. Für den dafür nötigen Freiraum seitlich und oberhalb der Oberleitung wird ein sogenanntes Lichtraumprofil definiert. Die Vermeidung von Kollisionen mit seitlichen Strukturen durch Einhaltung der Grenzen des Lichtraumprofils ist insbesondere dann eine Herausforderung, wenn die Seitenbewegung so abrupt ist, dass das Fahrzeug und damit auch der Stromabnehmer bis zum Auslösen der Absenkung durch seine Endkontaktelemente bereits eine so hohe Seitengeschwindigkeit erreicht hat, dass durch eine vorgegebene Absenkgeschwindigkeit das Lichtraumprofil verletzt wird.

Aus DE 10 2012 213 460 A1 ist ein nicht schienengebundenes Fahrzeug, insbesondere Lastkraftwagen oder Bus, mit einem Stromabnehmer zur Einspeisung elektrischer Energie aus einer zweipoligen Oberleitung bekannt. Hin- und Rückleiter der Oberleitung sind als Fahrdrähte ausgebildet und werden jeweils durch mindestens eine Schleifleiste des Stromabnehmers kontaktierbar. Der Stromabnehmer weist ein gelenkiges Traggestänge auf, welches sich fahrzeugseitig auf eine Stellplattform abstützt und fahrdrahtseitig eine die Schleifleisten tragende Wippenanordnung trägt. Die Stellplattform ist zur Ausführung einer quer zu einer Fahrzeuglängsachse gerichteten Stellbewegung des Stromabnehmers relativ zum Fahrzeug mittels einer Stelleinrichtung bewegbar. Hierdurch kann der Stromabnehmer eines erfindungsgemäßen Fahrzeugs auch bei höheren Fahrgeschwindigkeiten zuverlässig den Kontakt zu den Fahrdrähten halten.

In DE 10 2008 048 827 A1 ist ein Spurführungssystem zur Führung eines Fahrzeugs auf einer vorgegebenen Fahrspur beschrieben, insbesondere zur Führung eines Trolleybusses für den öffentlichen Personenverkehr. Das Fahrzeug weist einen Stromabnehmer aufweist, der relativ zu dem Fahrzeug beweglich ist und der dazu ausgestaltet ist, elektrische Energie aus einer Stromleitung, die entlang der vorgegebenen Fahrspur verläuft, für einen Antrieb und/oder für Hilfsbetriebe des Fahrzeugs bereitzustellen. Das System weist einen Positions- und/oder Wegsensor auf, der derart mit dem Fahrzeug und/oder mit dem Stromabnehmer kombiniert ist, dass der Sensor wiederholt eine Relativposition und/oder einen relativ zwischen dem Stromabnehmer und dem Fahrzeug zurückgelegten Weg detektiert und ein entsprechendes Detektionssignal erzeugt. Der Sensor ist mit einer Lenksteuerung verbunden, die ausgestaltet ist, die Detektionssignale zu empfangen und das Fahrzeug abhängig von den Detektionssignalen so zu lenken, dass das Fahrzeug auf der vorgegebenen Fahrspur fährt.

WO 2016/127775 A1 beschreibt einen Stromabnehmermast mit einem intelligenten Steuersystem, bestehend aus einer Steuereinheit, einem Horizontalwinkelsensor und einem Vertikalwinkelsensor. Die Steuereinheit ist über eine Luftleitung mit einem Vorsteuermagnetventil und einem pneumatisch-logischen Steuerventil verbunden und steuert über das Vorsteuermagnetventil den Eintritt eines Gases in das pneumatisch-logische Steuerventil. Gleichzeitig wird ein Magnetventil innerhalb des pneumatisch-logischen Steuerventils unter der Kontrolle der Steuereinheit ein- und ausgeschaltet, so dass ein Zylinder auf dem Stromabnehmermast den Druck erhöhen, den Druck verringern oder den Druck aufrechterhalten kann. Das System setzt den Zylinder in Betrieb, indem es die Signale des Horizontalwinkelsensors und des Vertikalwinkelsensors sammelt und an die Steuereinheit überträgt, um das Vorsteuermagnetventil und das pneumatische Logiksteuerventil zu steuern, wodurch die Funktionen schnelles Anheben/schnelles Absenken und verzögertes Anheben/verzögertes Absenken für die Stromabnehmerstange implementiert werden und die Sicherheit und der Komfort des Betriebs des Stromabnehmermasts erhöht werden.

Aus DE 20 2012 012 543 U1 ist ein nicht schienengebundenes Fahrzeug für einen Betrieb auf einer durch eine Oberleitungsanlage elektrifizierten Fahrstrecke, insbesondere auf einer Fahrspur einer mehrspurigen Fahrbahn bekannt. Das Fahrzeug weist einen Stromabnehmer zur Energieübertragung zwischen Fahrzeug und Oberleitung und eine Absenkeinrichtung zur Überführung des Stromabnehmers von einer aufgerichteten Betriebsstellung, in welcher der Stromabnehmer mit Fahrdrähten der Oberleitungsanlage in Schleifkontakt steht, in eine abgesenkte Ruhestellung, in welcher der Stromabnehmer innerhalb eines vorgegebenen Lichtraumprofils des Fahrzeugs angeordnet ist, auf. In der Fahrerkabine ist dabei ein Betätigungselement zur gleichzeitigen Betätigung der Absenkeinrichtung und einer weiteren Fahrzeugeinrichtung, deren Betätigung in einer eine Stromabnehmerabsenkung erfordernde Fahrsituation vorgesehen ist, angeordnet.

Aus DE 10 2018 215 941 A1 ist ein nicht spurgebundenes, elektrisch angetriebenes Fahrzeug bekannt, umfassend einen Stromabnehmer zur Einspeisung von elektrischer Energie aus einer zweipoligen Oberleitungsanlage, der ein gelenkiges Traggestänge aufweist, das fahrdrahtseitig eine Kontaktwippe mit einer Schleifleiste trägt und das fahrzeugseitig mit einem Hubantrieb zum Aufstellen des Traggestänges und zum Andrücken der Kontaktwippe an einen Fahrdraht der Oberleitungsanlage gekoppelt ist. Ferner weist das Fahrzeug eine Erfassungseinrichtung zur Erfassung einer Seitenlage eines Kontaktpunktes des Fahrdrahtes auf der Schleifleiste und ein Fahrerassistenzsystem zur Ausführung eines automatischen Lenkeingriffs in Anhängigkeit von der erfassten Seitenlage des Kontaktpunktes auf. Indem die Schleifleiste über mindestens zwei Federelemente an der Kontaktwippe abgestützt ist, und die Erfassungseinrichtung zwei Wegsensoren zur Messung von Einfederwegen der Federelemente und eine mit den Wegsensoren verbundene Auswertungseinheit zur Ermittlung der Seitenlage des Kontaktpunktes aus den gemessene Einfederwege repräsentierenden Sensorsignalen aufweist, wird ein Fahrzeug mit erhöhter Verfügbarkeit für eine elektrische Energieeinspeisung aus der Oberleitungsanlage bereitgestellt.

Der Erfindung liegt daher die Aufgabe zugrunde, ein Straßenfahrzeug der eingangs genannten Art bereitzustellen, welches auch bei abrupten Fahrzeugbewegungen quer zur Fahrtrichtung sicher betrieben werden kann.

Die Aufgabe wird erfindungsgemäß gelöst durch ein gattungsgemäßes Straßenfahrzeug mit den im kennzeichnenden Teil des Patentanspruches 1 angegebenen Merkmalen.

Demnach umfasst das Straßenfahrzeug einen elektrischen oder hybridelektrischen Traktionsantrieb und einen Stromabnehmer zur Einspeisung von Traktionsenergie aus einer zweipoligen, je Kontaktpol einen Fahrdraht aufweisenden Oberleitungsanlage. Der Stromabnehmer weist ein aufrichtbares Traggestänge mit einem festen Ende, an dem es sich gelenkig auf einer Gestängebasis abstützt, und einem freien Ende, an dem das Traggestänge je Kontaktpol eine Schleifleiste zur elektrischen Kontaktierung der jeweiligen Fahrdrähte trägt; das können je Kontaktpol eine einzige, zwei oder auch mehrere Schleifleisten sein. Ein Hubantrieb dient zum Aufrichten und Absenken des Traggestänges zwischen einer unteren Ruheposition und einer oberen Arbeitsposition der Schleifleisten. Erfindungsgemäß weist der Stromabnehmer ferner einen Beschleunigungssensor zur Erfassung einer Querbeschleunigung des Stromabnehmers im Fahrzeugbetrieb und eine mit dem Hubantrieb gekoppelte Steuereinheit auf, welche dazu ausgebildet ist, ein Absenken des Traggestänges in Abhängigkeit von der erfassten Querbeschleunigung auszulösen. Damit kann in Abhängigkeit der Quergeschwindigkeit, die sich zwangsläufig aus den Querbeschleunigungen ergibt, schon unterschiedlich früh mit dem Absenken des Stromabnehmers begonnen werden, um so in jeder Fahrsituation mit Querlenkbewegungen etwa den gleichen Freiraum zu benötigen. Es wird ein geschwindigkeitsunabhängiger Raumbedarf seitlich der Fahrdrähte und damit eine erhöhte Sicherheit bei seltenen, aber gefährlichen Fahrmanövern erzielt.

In einer vorteilhaften Ausführungsform des erfindungsgemäßen Straßenfahrzeugs ist die Steuereinheit dazu ausgebildet, die erfassten Querbeschleunigungen zeitlich zu einem Integralwert aufzuintegrieren und ein Absenken des Traggestänges in Abhängigkeit einer Überschreitung einer vorgegebenen Schwellwertkurve für den Integralwert auszulösen. Ausgehend von einem Anfangswert ergibt sich der Endwert der Quergeschwindigkeit nach einer Zeitdauer durch zeitliche Integration der gemessenen Querbeschleunigungen über diese Zeitdauer. Die Auslösung des Abdrahtvorgangs ist also vom Produkt aus Querbeschleunigung und Zeit abhängig. Durch entsprechend robust gewählte Schwellwerte werden Fehlauslösungen vermieden, das heißt Absenkauslösungen aufgrund kurzzeitiger Querbeschleunigungen, etwa durch Bodenwellen oder Scherwinde. Hierdurch ist es möglich, für die Infrastruktureinrichtungen an Fahrbahnen mit elektrifizierten Fahrstreifen fahrsituationsunabhängige Freiräume zu definieren, die unnötige und kostspielige Alternativmaßnahmen vermeiden. Des Weiteren können die erfassten Beschleunigungswerte zum Dämpfen hochfrequenter Schwingungsanteile, welche nicht auf die Fahrtrichtung des Straßenfahrzeugs, sondern nur auf orts- und geschwindigkeitsunabhängige Vibrationen oder sogenannten Anti-Reset Windups zurückzuführen sind, gefiltert werden.

In einer weiteren vorteilhaften Ausführungsform des erfindungsgemäßen Straßenfahrzeugs ist die Schwellwertkurve für den Integralwert zeitabhängig, vorzugsweise hyperbolisch mit der Zeit abnehmend. Unterhalb der Schwellwertkurve findet keine Auslösung des Absenkvorgangs statt, bei Überschreiten drahtet der Stromabnehmer ab. Durch die Betrachtung über das Produkt von Querbeschleunigung und Zeit führen höhere Querbeschleunigungen schon nach kürzerer Zeit zum Abdrahten, niedrigere erst nach längerer Zeit.

In einer weiteren vorteilhaften Ausführungsform des erfindungsgemäßen Straßenfahrzeugs weist der Stromabnehmer Endlagensensoren auf, die derart angeordnet und ausgebildet sind, dass sie erfassen, wenn ein Kontaktpunkt zwischen Fahrdraht und Schleifleiste in einen von je zwei seitlichen Endabschnitten der Schleifleisten eindringt, wobei die Steuereinheit dazu ausgebildet ist, ein Absenken des Traggestänges auszulösen, sobald der Kontaktpunkt in einen der Endabschnitte eindringt. Die erfindungsgemäße Maßnahme ist zunächst unabhängig von der relativen seitlichen Lage des Kontaktpunkts zwischen Fahrdraht und Schleifleiste. Beginnt die Querbeschleunigung mit großem Abstand zum Endlagensensor, so erreicht der Stromabnehmer gemäß dem eingangs beschriebenen Stand der Technik eine hohe Querbeschleunigung, bis der Endlagensensor reagiert. Erfindungsgemäß greift der Beschleunigungssensor schon früher ein, da sein Schwellwert beim Integrieren über die Zeit schon früher erreicht wird. Ist der Abstand zum Endlagensensor hingegen verkürzt, kann der Stromabnehmer keine allzu große Quergeschwindigkeit erreichen und in diesem Fall löst der Endlagensensor vor dem Beschleunigungssensor aus. In beiden Fällen ist die laterale Fallkurve ähnlich und kann innerhalb der Grenzen des definierten Lichtraumprofils gehalten werden.

Weitere Vorteile und Eigenschaften des erfindungsgemäßen Straßenfahrzeugs ergeben sich aus nachfolgender Beschreibung eines Ausführungsbeispiels anhand der Zeichnungen, in deren
- FIG 1: ein auf einer mehrspurigen Fahrbahn befindliches Straßenfahrzeug mit Blick in Fahrtrichtung,
- FIG 2: eine Anordnung von Schleifleisten des Straßenfahrzeugs aus FIG 1 in Draufsicht und
- FIG 3: eine Schwellwertkurve für den Integralwert der Querbeschleunigung des Stromabnehmers
schematisch veranschaulicht sind.

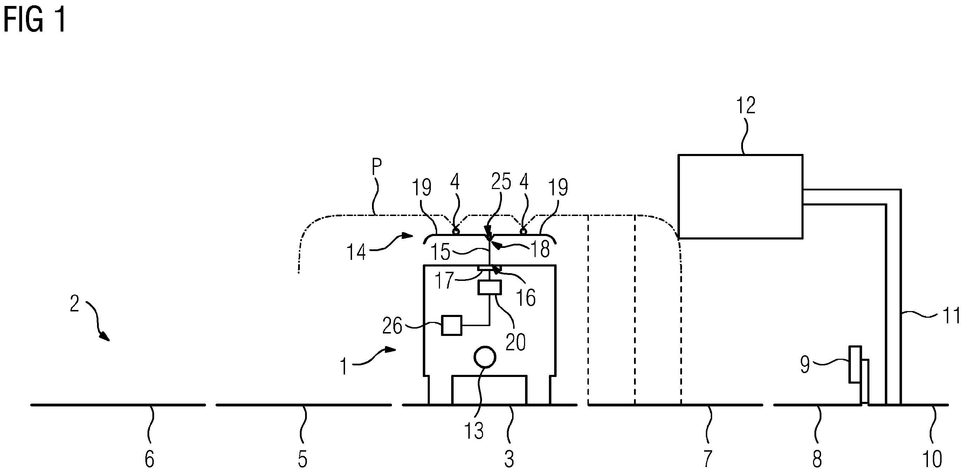

Gemäß FIG 1 befährt ein erfindungsgemäßes Straßenfahrzeug 1 eine mehrspurige Fahrbahn 2, etwa eine Autobahn mit Rechtsverkehr, deren durchgängige Verkehrsfläche mittels Fahrbahnmarkierungen unterteilt ist. So nutzt das Straßenfahrzeug 1 eine durch einen rechten Fahrstreifen 3 gebildete, elektrifizierte Fahrspur, oberhalb welcher als Hin- und Rückleiter ausgebildete Fahrdrähte 4 einer zweipoligen Oberleitungsanlage parallel zueinander und symmetrisch zu einer Fahrstreifenmitte angeordnet sind. Solche Oberleitungsanlagen sind an sich bekannt, weshalb Tragseile und Hänger für die Fahrdrähte 4 sowie Seitenhalter, Ausleger, Masten und Spanneinrichtungen ebenso wie Unterwerke nicht dargestellt sind. Aufgrund seiner Spurungebundenheit kann das Straßenfahrzeugs 1 zum Überholen oder Ausweichen auch einen mittleren Fahrstreifen 5, der zwischen dem rechten Fahrstreifen 3 und einem linken Fahrstreifen 6 verläuft, oder zum Ausfädeln aus der Fahrbahn 2 an einer Ausfahrt einen Verzögerungsstreifen 7 benutzen. Rechts des Verzögerungsstreifens 7 verläuft ein Standstreifen 8, an dessen Außenseite ein als Leitplanke ausgebildetes Fahrzeugrückhaltesystem 9 angeordnet ist. Außerhalb der Fahrbahn 2 verläuft ein Grünstreifen 10, auf dem Infrastruktureinrichtungen, wie etwa Masten 11 für Verkehrsschilder 12, für Mess- und Überwachungseinrichtungen und dergleichen, aufgestellt sind.

Das Straßenfahrzeug 1, etwa ein Lastwagen oder Bus, umfasst einen elektrischen oder hybridelektrischen Traktionsantrieb 13 und einen Stromabnehmer 14 zur Einspeisung von Traktionsenergie für den Traktionsantrieb 13 aus der Oberleitungsanlage. Der Stromabnehmer 14 weist ein aufrichtbares Traggestänge 15 mit einem festen Ende 16, an dem es sich gelenkig auf einer fahrzeugseitigen Gestängebasis 17 abstützt, und mit einem freien Ende 18, an dem das Traggestänge 15 je Kontaktpol mindestens eine Schleifleiste 19 zur elektrischen Kontaktierung des jeweiligen Fahrdrahts 4 trägt, auf. Zum Aufrichten und Absenken des - beispielsweise pantographenartig ausgebildeten - Traggestänges 15 zwischen einer unteren Ruheposition, in der die Schleifleisten 19 im Bereich eines Fahrzeugdaches liegen, und einer oberen Arbeitsposition, in der die Schleifleisten 19 an den Fahrdrähten 4 angedrahtet sind, weist der Stromabnehmer 14 einen Hubantrieb 20 auf, der beispielsweise als Luftbalg ausgebildet sein kann. Durch Öffnen eines Drosselventils kann daraus Luft entweichen und so ein Absenken des Traggestänges 15 ausgelöst werden.

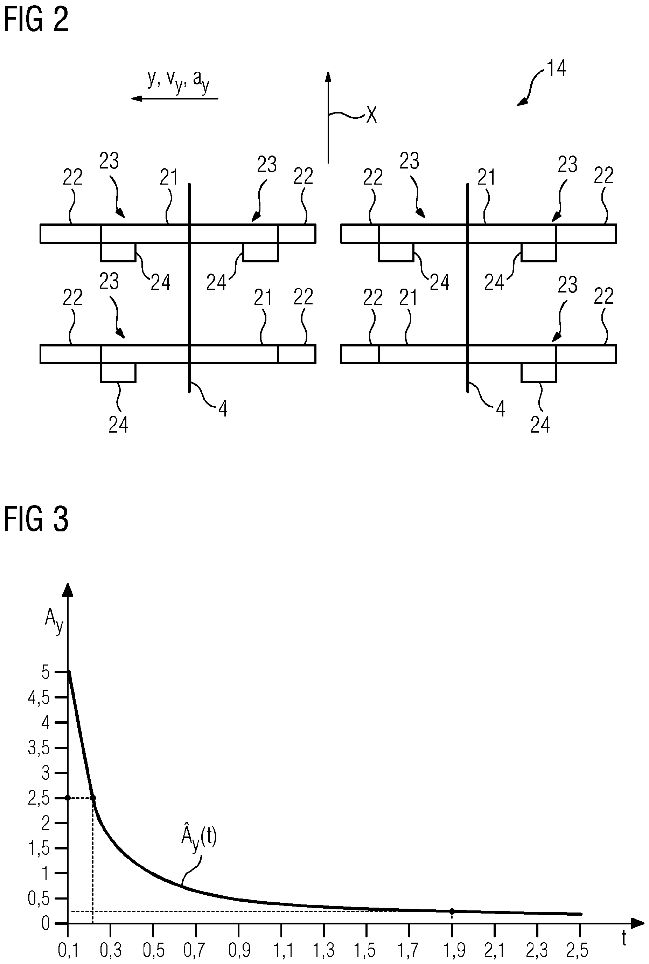

Gemäß FIG 2 können je Kontaktpol zwei parallel zueinander und bezüglich einer Fahrzeuglängsrichtung x quer und hintereinander liegende Schleifleisten 19 auf je einer um eine Fahrzeugquerachse drehbar gelagerte Wippe angeordnet sein. Jede Schleifleiste 19 umfasst ein aus Kohlenstoff bestehendes Schleifstück 21, welches in einer Schleifstückhalterung befestigt ist. An beiden Enden des Schleifstückes 21 schließen sich nach unten gebogene Endhörner 22 an. In seitlichen Endabschnitten 23 des Schleifstückes 21 sind Endlagensensoren 24 angeordnet, welche erfassen, wenn ein Kontaktpunkt zwischen Fahrdraht 4 und Schleifleiste 19 in einen der Endabschnitte 23 eindringt.

Aufgrund seiner seitlichen Ausdehnung und der erreichbaren Höhe in seiner Arbeitsposition bildet der Stromabnehmer 14 gegenüber Fahrzeugen mit herkömmlich zugelassenen Fahrzeugabmessungen eine Gefahrenquelle im Hinblick auf Kollisionen und Verhakens - sowohl in Bezug auf die Oberleitungskomponenten als auch in Bezug auf andere streckenseitige Infrastruktureinrichtungen. Bezüglich der elektrifizierten Fahrspur 3 wird daher ein Lichtraumprofil definiert, dessen Grenzen P in FIG 1 als Strich-Punkt-Linie angedeutet und so gewählt sind, dass der Stromabnehmer 14 im Betrieb des Straßenfahrzeugs 1 auf dem rechten Fahrstreifen 3 diese Grenzen P beim Anheben und Absenken nicht überschreitet. Der Erfindung liegt nun die Erkenntnis zugrunde, dass bei gegebener Absenkgeschwindigkeit des Stromabnehmers 14, die beispielsweise schwerkraftgetrieben und somit durch dessen Eigengewicht bestimmt ist, es nicht in allen Fahrsituationen ausreichend ist, wenn ein automatisches Absenken nur bei Eindringen des Kontaktpunktes in einen der Endabschnitte 23 ausgelöst wird.

Erfindungsgemäß weist der Stromabnehmer 14 daher einen Beschleunigungssensor 25 zur Erfassung einer Querbeschleunigung a_{y} des Stromabnehmers 14 im Fahrzeugbetrieb auf. Der Beschleunigungssensor 25 ist vorzugsweise direkt im Stromabnehmer 14 integriert, kann aber auch an anderen Einbauorten im Straßenfahrzeug 1 untergebracht sein. Mit dem Hubantrieb 20 ist eine Steuereinheit 26 gekoppelt, welche dazu ausgebildet ist, ein Absenken des Traggestänges 15 in Abhängigkeit von der erfassten Querbeschleunigung a_{y} auszulösen. Im dargestellten Ausführungsbeispiel ist die Steuereinheit 26 dazu ausgebildet, die erfassten Querbeschleunigungen a_{y} über die Zeit t zu einem Integralwert A_{y} aufzuintegrieren und ein Absenken des Traggestänges 15 in Abhängigkeit einer Überschreitung einer vorgegebenen Schwellwertkurve Â_{y}(t) für den Integralwert A_{y} auszulösen. Die Schwellwertkurve Â_{y}(t) ist zeitabhängig und nimmt vorzugsweise mit zunehmender Zeit t hyperbolisch ab.

Hierdurch gewinnt man den Vorteil, dass ein Absenken des Stromabnehmers 14 nicht nur in Abhängigkeit der Position des Straßenfahrzeugs 1 relativ zu den Fahrdrähten 4, sondern zusätzlich in Abhängigkeit der Quergeschwindigkeit v_{y} des Straßenfahrzeugs 1 beziehungsweise des Stromabnehmers 14 ausgelöst wird. Die Quergeschwindigkeit v_{y} ergibt sich zwangsläufig aus der gemessenen Querbeschleunigung a_{y}, mit der das Straßenfahrzeug 1 situationsbedingt aus der Mitte des elektrifizierten Fahrstreifens 3 gelenkt wird. Damit nicht bereits ein singulärer Spitzenwert der gemessenen Querbeschleunigung a_{y} ein Absenken auslöst, wird der Integralwert A_{y} mit der Schwellwertkurve Â_{y}(t) verglichen. Die Auslösung des Absenkvorgangs ist also vom Produkt aus Querbeschleunigung a_{y} und Zeit t abhängig. Ein Absenken wird ausgelöst, wenn sich innerhalb kurzer Zeit t (z.B. 0,2 Einheiten) die gemessenen Querbeschleunigungen a_{y} schon zu einem hohen Integralwert A_{y} (z.B. größer 2,5 Einheiten) kumuliert haben. Ein geringerer Integralwert A_{y} (z.B. 0,25 Einheiten) löst ein Absenken erst aus, wenn sich dieser aus einer Integration der Querbeschleunigungen a_{y} über einen längeren Zeitraum t (z.B. 1,9 Einheiten) ergibt. Daher kann situationsabhängig unterschiedlich frühzeitig mit dem Absenken des Stromabnehmers 14 begonnen werden, um in jeder Fahrsituation mit einer Querkomponente von Fahrzeuggeschwindigkeit v_{y} bzw. Fahrzeugbeschleunigung a_{y} etwa den gleichen seitlichen Freiraum zu benötigen. Die Vorteile sind ein geschwindigkeitsunabhängiger Raumbedarf seitlich der Fahrdrähte 4 und damit eine erhöhte Sicherheit auch bei seltenen, aber gefährlichen Fahrmanövern.

## Patentansprüche

1. Straßenfahrzeug (1), umfassend
- einen elektrischen oder hybridelektrischen Traktionsantrieb (13) und
- einen Stromabnehmer (14) zur Einspeisung von Traktionsenergie aus einer zweipoligen, je Kontaktpol einen Fahrdraht (4) aufweisenden Oberleitungsanlage, welcher
- ein aufrichtbares Traggestänge (15) mit einem festen Ende (16), an dem es sich gelenkig auf einer Gestängebasis (17) abstützt, und einem freien Ende (18), an dem es je Kontaktpol wenigstens eine Schleifleiste (19) zur elektrischen Kontaktierung der jeweiligen Fahrdrähte (4) trägt, und
- einen Hubantrieb (20) zum Aufrichten und Absenken des Traggestänges (15) zwischen einer unteren Ruheposition und einer oberen Arbeitsposition der Schleifleisten (19),
aufweist,
**dadurch gekennzeichnet,**
- **dass** der Stromabnehmer (14) ferner
- einen Beschleunigungssensor (25) zur Erfassung einer Querbeschleunigung (a_{y}) des Stromabnehmers (14) und
- eine mit dem Hubantrieb (20) gekoppelte Steuereinheit (26), welche dazu ausgebildet ist, ein Absenken des Traggestänges (15) in Abhängigkeit von der erfassten Querbeschleunigung (a_{y}) auszulösen,
aufweist.

2. Straßenfahrzeug (1) nach Anspruch 1,
- wobei die Steuereinheit (26) dazu ausgebildet ist, die erfassten Querbeschleunigungen (a_{y}) zeitlich zu einem Integralwert (A_{y}) aufzuintegrieren und ein Absenken des Traggestänges (15) in Abhängigkeit einer Überschreitung einer vorgegebenen Schwellwertkurve (Äy(t)) für den Integralwert (A_{y}) auszulösen.

3. Straßenfahrzeug () nach Anspruch 2,
- wobei die Schwellwertkurve (Äy(t)) für den Integralwert (A_{y}) zeitabhängig ist, vorzugsweise hyperbolisch mit der Zeit (t) abnimmt.

4. Straßenfahrzeug (1) nach einem der Ansprüche 1 bis 3,
- wobei der Stromabnehmer (14) Endlagensensoren (24) aufweist, die derart angeordnet und ausgebildet sind, dass sie erfassen, wenn ein Kontaktpunkt zwischen Fahrdraht (4) und Schleifleiste (19) in einen von je zwei seitlichen Endabschnitten (23) der Schleifleisten (19) eindringt,
- wobei die Steuereinheit (26) dazu ausgebildet ist, ein Absenken des Traggestänges (15) auszulösen, sobald der Kontaktpunkt in einen der Endabschnitte (23) eindringt.

## Claims

1. Road vehicle (1), comprising
- an electric or hybrid-electric traction drive (13) and
- a current collector (14) for feeding traction energy from a two-pole overhead line system which has a contact wire (4) for each contact pole, which current collector has
- an erectable supporting linkage (15) with a fixed end (16), at which the supporting linkage is supported in an articulated manner on a linkage base (17), and a free end (18), at which the supporting linkage has at least one contact strip (19) for electrically contacting the respective contact wires (4) for each contact pole, and
- a lifting drive (20) for erecting and lowering the supporting linkage (15) between a lower inoperative position and an upper working position of the contact strips (19),
**characterized**
- **in that** the current collector (14) further has
- an acceleration sensor (25) for detecting a lateral acceleration (a_{y}) of the current collector (14) and
- a control unit (26) which is coupled to the lifting drive (20) and is designed to initiate lowering of the supporting linkage (15) depending on the detected lateral acceleration (a_{y}).

2. Road vehicle (1) according to Claim 1,
- wherein the control unit (26) is designed to integrate the detected lateral accelerations (a_{y}) with respect to time to form an integral value (A_{y}) and to initiate lowering of the supporting linkage (15) depending on a specified threshold value curve (Ây(t)) for the integral value (A_{y}) being exceeded.

3. Road vehicle (1) according to Claim 2,
- wherein the threshold value (Ây(t)) for the integral value (A_{y}) is time-dependent, preferably decreases hyperbolically over time (t).

4. Road vehicle (1) according to any of Claims 1 to 3,
- wherein the current collector (14) has end position sensors (24) which are arranged and designed in such a way that they detect when a contact point between a contact wire (4) and a contact strip (19) enters one of in each case two lateral end sections (23) of the contact strips (19),
- wherein the control unit (26) is designed to initiate lowering of the supporting linkage (15) as soon as the contact point enters one of the end sections (23).

## Revendications

1. Véhicule routier (1) comprenant
- un système d'entraînement à traction électrique ou hybride-électrique (13) et
- un collecteur de courant (14) pour l'alimentation en énergie de traction à partir d'une installation de ligne aérienne bipolaire présentant un fil de contact (4) par pôle de contact, qui
- comprend une tige de support (15) apte à être dressée, ayant une extrémité fixe (16), par laquelle elle s'appuie de manière articulée sur une base de tige (17), et une extrémité libre (18), par laquelle elle porte, pour chaque pôle de contact, au moins une baguette collectrice (19) pour la mise en contact électrique des fils de contact (4) respectifs, et
- présente un système d'entraînement de levage (20) pour élever et abaisser la tige de support (15) entre une position de repos inférieure et une position de travail supérieure des barrettes de frottement (19), **caractérisé en ce que**
- le collecteur de courant (14) présente en outre
- un capteur d'accélération (25) pour détecter une accélération transversale (a_{y}) du collecteur de courant (14) et
- une unité de commande (26) reliée au système d'entraînement de levage (20), qui est conçue pour déclencher un abaissement de la tige de support (15) en fonction de l'accélération transversale (a_{y}) détectée.

2. Véhicule routier (1) selon la revendication 1,
- dans lequel l'unité de commande (26) est conçue de façon à intégrer temporellement les accélérations transversales (a_{y}) détectées pour former une valeur intégrale (A_{y}) et pour déclencher un abaissement de la tige de support (15) en fonction d'un dépassement d'une courbe de seuil (Ây(t)) prédéterminée pour la valeur intégrale (A_{y}) .

3. Véhicule routier (1) selon la revendication 2,
- dans lequel la courbe de seuil (Ây(t)) pour la valeur intégrale (A_{y}) est dépendante du temps, de préférence décroît de manière hyperbolique avec le temps (t).

4. Véhicule routier (1) selon l'une des revendications 1 à 3,
- dans lequel le collecteur de courant (14) comprend des capteurs de fin de course (24) qui sont disposés et configurés de manière à détecter, lorsqu'un point de contact entre le fil de contact (4) et la barre de frottement (19) pénètre dans l'une des deux parties d'extrémité latérales (23) de chacune des barres de frottement (19),
- l'unité de commande (26) étant configurée pour déclencher un abaissement de la tige de support (15) dès que le point de contact pénètre dans l'une des parties d'extrémité (23).
